# EUROPÄISCHE PATENTSCHRIFT

(11) **EP 1 322 873 B1**
(45) Veröffentlichungstag und Bekanntmachung des Hinweises auf die Patenterteilung: **08.12.2004**
(21) Anmeldenummer: 01976263.2
(22) Anmeldetag: 02.10.2001
(51) Int. Cl.: F16F 15/00, B64C 27/00

(54) **PIEZOELEKTRISCHER DEHNUNGSAKTUATOR**
PIEZOELECTRIC EXTENSION ACTUATOR
ACTIONNEUR D'EXTENSION PIEZO-ELECTRIQUE

(30) Priorität: 05.10.2000 DE 10049176; 11.08.2001 DE 10139686
(43) Veröffentlichungstag der Anmeldung: 02.07.2003
(73) Patentinhaber: EADS Deutschland GmbH, 81663 München (DE)
(72) Erfinder: BEBESEL, Dr. Marius, F-13090 Aix-en-Provence (FR); JÄNKER, Dr. Peter, 85521 Riemerling (DE)
(86) Internationale Anmeldenummer: PCT/EP2001/011360
(87) Internationale Veröffentlichungsnummer: WO 2002/031378

(56) Entgegenhaltungen:
- EP-A- 0 926 387
- WO-A-92/05592
- DE-A- 19 813 959
- DE-A- 19 925 982
- US-A- 5 913 955

## Beschreibung

Die Erfindung betrifft einen piezoelektrischen Dehnungsaktuator gemäß dem Oberbegriff des Patentanspruchs 1 und dem des Nebenanspruchs 8.

Ein solcher Dehnungsaktuator ist aus der EP 0 926 387 A bekannt.

Zur Vibrationskontrolle und zur Beeinflussung von Vibrationen in Strukturen ist die Verwendung von d31-Piezoplatten oder d31-Piezosegmenten bekannt. d31-Piezoplatten nutzen die elastische Querkontraktion des piezoelektrischen Werkstoffes. Mehrere Piezoplatten oder -segmente werden nachfolgend kurz als Piezostapel bezeichnet. Ein Piezostapel wird von mehreren Piezoelementen, mindestens 2 Piezoelementen, gebildet. Mit den vorgenannten d31-Piezoelementen werden beispielsweise Dehnungen in Trägerstrukturen für Hubschraubergetriebe eingeleitet, um damit die Übertragung von Körperschall auf die Hubschrauberzelle zu unterdrücken. Dabei sind die d31-Piezoelemente entsprechend ihrer Dehnungsrichtung, die parallel zu der Oberfläche der d31-Elemente wirkt, flächig in die Oberfläche der Trägerstrukturen integriert; z.B. mittels einer Klebetechnik.

Im Vergleich dazu wirkt die Dehnung in den bekannten d33-Piezoelementen senkrecht zur Oberfläche der Elemente, denn d33-Piezoplatten nutzen die Dehnung des piezoelektrischen Werkstoffes in Richtung des angelegten Feldes.

Die DE 198 13 959 A1 verfolgt das Ziel, eine Einrichtung zur Körperschallunterdrückung bereitzustellen, die die Übertragung von Maschinenvibrationen und -schwingungen durch eine Trägerstruktur auf eine Zellenstruktur eines Cockpits bei möglichst einfacher Bauweise und mit verhältnismäßig geringem Integrationsaufwand wirkungsvoller reduziert. Die DE 198 13 959 A1 lehrt, dass die Einrichtung zur Körperschallunterdrückung zumindest einen Piezoaktuator beinhaltet, der Schwingungen in die Trägerstruktur einleitet, um den Körperschall-Übertragungspfad auf die zu isolierende Struktur im Wesentlichen zu sperren und um die Schallerregung mittels der vorhandenen und erregten Systemmaßen des Schallerzeugers wirkungsvoller zu kompensieren. Diese technische Lehre ist nicht auf eine Anwendung im Hubschrauberbau eingeschränkt. Sie kann in allen Bereichen des Maschinenbaus eingesetzt werden, wo eine Einrichtung zur Körperschallunterdrückung notwendig wird.

Im Gegensatz zu anderen, bekannten Dehnungsaktuatoren realisiert der Piezoaktuator realisiert die Krafteinleitung nicht mehr annähernd punktuell in die Trägerstruktur, sondern über eine relativ große Oberfläche der Trägerstruktur. Die Trägerstruktur kann beispielsweise zwischen Hauptgetriebe eines Rotors und einer Zellenstruktur des Cockpits eines Hubschraubers angeordnet sein. Die Trägerstruktur wäre in diesem Fall als eine oder mehrere Streben (auch Getriebestrebe genannt). Der Piezoaktuator ist im Wesentlichen entlang des gesamten Umfangs der Strebe angeordnet und hat eine definierte Ausdehnung in der axialen Richtung der Strebe. Die Krafteinleitung vom Piezoaktuator nach DE 198 13 959 A1 erfolgt über dessen Fläche.

Der Wirkungsgrad der Krafteinleitung ist dort durch die effektiv zu bedeckende Fläche der Strebe begrenzt.

Der Erfindung liegt die Aufgabe zugrunde, einen piezoelektrischen Dehnungsaktuator für d33-Piezoelemente zu schaffen, mit dem sich Vibrationen in Strukturen unterdrücken lassen und weiterhin den Wirkungsgrad der Krafteinleitung eines Piezoaktuators deutlich zu erhöhen trotz gegensätzlicher Tendenz einer Verkleinerung des Bauvolumens des Piezoaktuators.

Diese Aufgabe wird erfindungsgemäß durch die Merkmale des Patentanspruchs 1 sowie alternativ durch die Merkmale des Nebenanspruchs 8 gelöst. Weiterbildungen der Erfindung sind in den Unteransprüchen angegeben.

Eine erfindungsgemäße Lösung beruht darauf, dass ein d33-Piezoelement in Form eines Stapels in einem mechanischen Rahmen eingespannt ist, der auf der Oberfläche der Struktur befestigt ist. Neben einer hohen spezifischen, mechanischen Leistung lässt sich mit dem erfindungsgemäßen Dehnungsaktuator auch ein guter Wirkungsgrad erzielen. Ebenfalls vorteilhaft ist die Aufbringung einer in den Aktuator integrierten, mechanischen Vorspannung, mit der sich die für Piezoelemente so kritischen Zugbelastungen vermeiden lassen. Optional können in den Rahmen Mittel integriert sein, mit denen sich vorteilhaft Hubübersetzungen oder Steifigkeitstransformationen erzielen lassen.

Bei einer weiteren erfindungsgemäßen Lösung gelingt es, eine Wirkungsgradverbesserung der Krafteinleitung für den Piezoaktuator zu erzielen, in dem der Abstand der Aufsetzflächen zweier Abtriebselemente eines Piezoaktuators gegenüber einer entsprechenden Endplatte des Piezostapels in axialer Richtung zum Strebenende deutlich erhöht ist. Die Abtriebselemente des mechanischen Rahmens bilden die Kraftübertragungsmittel vom Piezoaktuator zur Strebe. Der damit deutlich vergrößerte Strebenabschnitt zwischen den Aufsetzflächen der beiden Abtriebselemente besitzt eine geringere Steifigkeit, in dessen Folge für die Dehnung dieses Strebenabschnitts eine geringere Kraft ausreichend ist als bei einer vergleichbaren Anordnung eines Piezoaktuators , wo der Abstand der Aufsetzflächen der Abtriebselemente im Wesentlichen der Länge des Piezostapels entspricht. Das Piezoelement verwendet auch die d33-Piezoelemente.

Anhand der Zeichnung werden nachstehend Ausführungsbeispiele der Erfindung näher erläutert. Es zeigt:
- Fig. 1: einen Dehnungsaktuator in geschnittener Ansicht,
- Fig. 2: einen Dehnungsaktuator mit Hubübersetzung,
- Fig. 3: eine alternative Ausführung eines Dehnungsaktuators mit Hubübersetzung,
- Fig. 4: ein Schema einer Strebe mit axial beabstandeten Abtriebselementen eines Piezoaktuators,
- Fig. 5: einen Ausschnitt einer Strebe mit manschettenförmigen Abtriebsele menten eines Piezoaktuators, und
- Fig. 6: alternative Ausgestaltung des Abtriebselements mit Aussparungen.

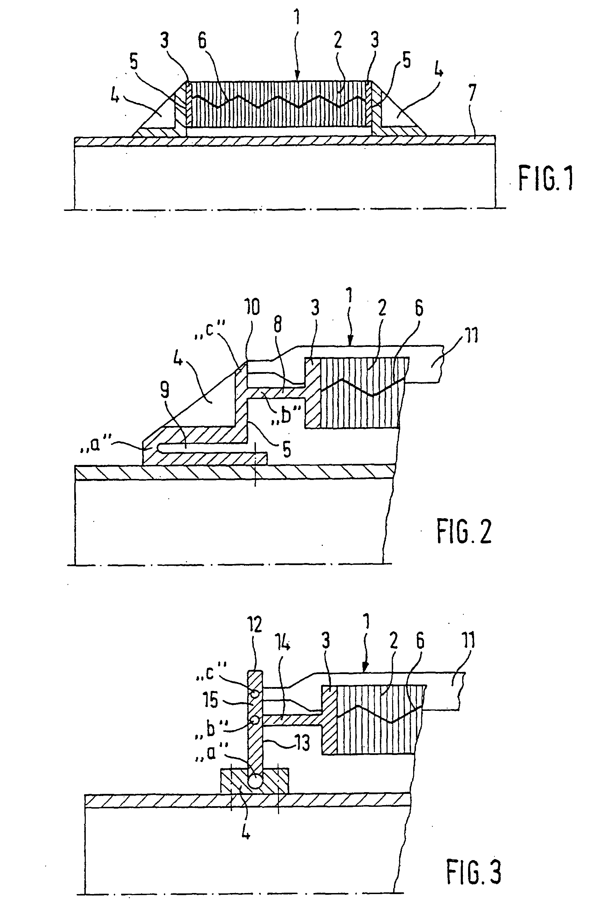

Der in **Fig. 1** gezeigte Dehnungsaktuator 1 ist auf der Oberfläche einer Struktur 7 starr befestigt und besteht aus einem d33-Piezostapel 2, zwei Endplatten 3, zwei Abtriebselementen 4 und einem Vorspannelement 6.

Der d33-Piezostapel 2 ist so in seinem mechanischen Rahmen angeordnet, dass seine Ausdehnungsrichtung parallel zur Oberfläche der Struktur 7 verläuft, in welche der Dehnungsaktuator 1 seine piezoelektrisch erzeugten Dehnungen überträgt. Der d33-Piezostapel beansprucht 1/3 des Materialvolumens eines d31-Piezostapels für eine gleichwertige aktive Dehnung.

Im Ausführungsbeispiel der Fig.1 ist der mechanische Rahmen aus den beiden auf der Struktur 7 starr befestigten Abtriebselementen 4 gebildet. Dazu sind die Abtriebselemente 4 so auf der Oberfläche der Struktur 7 befestigt, dass ihre Abtriebsfläche 5 parallel zu der jeweiligen Endplatte 3 des Piezostapels 2 ausgerichtet ist. Die Befestigung der Abtriebselemente 4 auf der Struktur 7 kann mittels bekannten Verbindungstechniken erfolgen; beispielsweise mittels Kleben.

Die Abtriebselemente 4 können mit ihrer Befestigungsfläche verschieden gekrümmten oder ebenen Strukturoberflächen angepasst sein. Im gezeigten Ausführungsbeispiel ist die Struktur ein Rohr mit einer kreisförmig gekrümmten Oberfläche. Die Länge des Piezoaktuators entspricht der Länge des zu dehnenden Strebenabschnitts.

Der Piezostapel 2 ist zwischen seinen zwei Endplatten 3 aufgenommen und mit einem Vorspannelement 6 auf mechanischer Druckvorspannung gehalten. Mögliche auf den Dehnungsaktuator 1 einwirkende, schädigende Zugbelastungen werden von dieser Druckvorspannung kompensiert und können dadurch nicht auf den Piezostapel 2 einwirken.

Das Vorspannelement 6 kann beispielsweise - wie im Ausführungsbeispiel der Fig.1 symbolisch angedeutet ist - mit einer oder mehreren mechanisch wirkenden Zugfedern realisiert sein. Es ist aber auch möglich, die Endplatten 3 als elastische Platten auszubilden und den Piezostapel 2 mit zusammengedrückten Endplatten 3 unter Druckvorspannung in den mechanischen Rahmen einzusetzen.

Der in **Fig. 2** gezeigte Dehnungsaktuator 1 mit Hubübersetzung entspricht dem vorangehend beschriebenen Ausführungsbeispiel bis auf die nachfolgend genannten Abweichungen. Die Endplatten 3 des Piezostapels 2 sind nicht direkt, sondern über einen biegeweichen Drucksteg 8 mit den Abtriebsflächen 5 der Abtriebselemente 4 verbunden und die Abtriebselemente 4 weisen einen nach innen einseitig offenen, parallel zur Oberfläche der Struktur 7 verlaufenden Schlitz 9 auf. Weiterhin sind die beiden Abtriebselemente 4 mit einer dehnungssteifen Abstützstange 11 starr miteinander verbunden, die jeweils an das freie Ende 10 der Abtriebselemente 4 angreift. Anstelle von einer Abstützstange 11 können auch zwei parallele Abstützstangen 11 beidseitig zum Piezostapel 2 angeordnet verwendet werden, wie es Fig.2 mit einer in der Zeichnung erkennbaren Abstützstange 11 entnehmbar ist.

Die biegeweichen Druckstege 8, Schlitze 9 und Abstützstange 11 bilden an jedem Abtriebselement 4 drei Gelenke "a", "b" und "c", um die sich Hebelabschnitte der Abtriebselemente 4 drehen können und eine Hubübersetzung in dem Dehnungsaktuator 1 erzeugen.

**Fig. 3** zeigt einen Dehnungsaktuator mit Hubübersetzung in einer zu Fig. 2 alternativen konstruktiven Ausführung der Abtriebselemente 4 und Gelenke "a", "b" und "c". Die Wirkung von Hebelabschnitten um die Gelenke "a", "b" und "c" entspricht im Prinzip dem vorangehend zu Fig. 2 beschriebenen Ausführungsbeispiel.

Die Abtriebselemente 4 sind hier mit einem im Gelenk "a" gelagerten Hebel 12 ausgebildet. Mit einem ersten Hebelabschnitt 13 beabstandet vom Gelenk "a" ist auf dem Hebel 12 das Gelenk "b" angeordnet, an welches der Piezostapel 2 mit einem Abtriebssteg 14 angreift.

Mit einem zweiten Hebelabschnitt 15 beabstandet vom Gelenk "b" ist auf dem Hebel 12 Gelenk "c" angeordnet. An Gelenk "c" greift die Abstützstange 11 an.

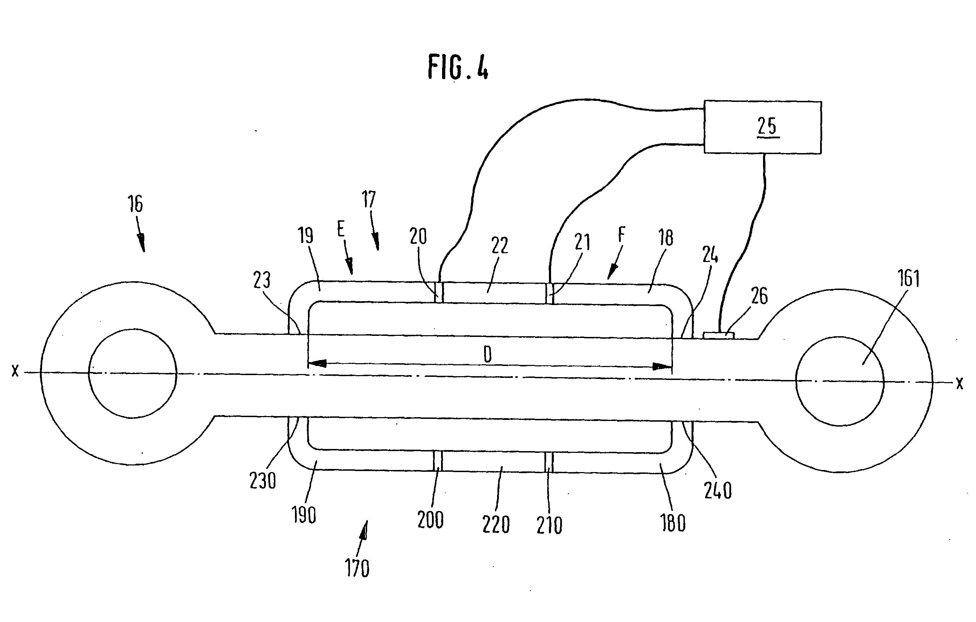

**Fig. 4** zeigt schematisch eine Strebe 16. Die Strebe kann beispielsweise ein Stahlrohr mit einer jeweils an dem Ende angeschweißten Befestigungsöse sein. Solch eine Strebe wird beispielsweise in 4-facher Ausführung verwendet, um das Hauptgetriebe des Rotors eines Hubschraubers mit der Zellenstruktur des Cockpits des Hubschraubers verbinden. Das Hauptgetriebe befindet sich dabei oberhalb der Decke der Zellenstruktur des Cockpits. Die Verbindung zwischen beiden erfolgt an 4 Orten durch jeweils eine Strebe 16. Das Hauptgetriebe des Rotors ist eine der Hauptquellen für die Lärmerzeugung im Cockpit. Da die Strebe 16 an der Schnittstelle zwischen Hauptgetriebe und Zellenstruktur sitzt, ist es zweckmäßig, an der Strebe elastische Form-änderungen zu erzeugen, die die über die Strebe eingeleiteten Kräfte im Wesentlichen kompensieren können. Dies erfolgt beispielsweise durch eine steuerbare Formänderung (Dehnung oder Kontraktion) der Strebe 16 in ihrer axialen Richtung X. Die gesteuerte, elastische Formänderung wird durch den Piezoaktuator 17 realisiert, der in einem bestimmten Abschnitt D der Strebe eine Formänderung, insbesondere eine Längenänderung in axialer Richtung X veranlasst. Auch bei der Strebe 16 nach Fig. 4 sind je Piezostapel zwei Abtriebselemente 18, 19 angeordnet. Die Abtriebselemente 18, 19 sind jedoch nicht unmittelbar nach der Endplatte 20, 21 eines Piezostapels 22 mit der Oberfläche der Strebe 16 verbunden, sondern die Aufsetzflächen 23, 24 der Abtriebselemente 18, 19 sind in axialer Richtung X gegenüber der Endplatte 20, 21 des Piezostapels 22 beabstandet. Der Piezostapel 22 muss nicht unmittelbar auf der Oberfläche der Strebe anliegen. An der Aufsetzfläche 23, 24 wird die vom Piezostapel 22 erzeugte Kraft auf die Strebe 16 eingeleitet. Diese Kraft erzeugt eine elastische Formänderung in einem Abschnitt D der Strebe 16 zwischen den beiden Aufsetzflächen 23, 24.

Der Abschnitt D entlang des Strebenumfangs umfasst die zutreffende abschnittsweise, räumliche Struktur der Strebe, kurz Abschnitt D genannt. Die dortige elastische Formänderung kompensiert die Vibrationskraft in der Strebe 16, und zwar im Bereich der Schnittstelle Strebe-Zellenstruktur.

Der piezoelektrische Dehnungsaktuator 17 wird aus d33-Piezoelementen gebildet, die zu einem Piezostapel 22 angeordnet sind. Die beiden Enden des Piezostapels 22 werden durch Endplatten 20, 21 begrenzt. An diesen Endplatten 20, 21 sind die Abtriebselemente 18, 19 angeordnet. Der Ort der Krafteinleitung eines Abtriebselements 18, 19 auf der Strebe 16 ist gegenüber der Endplatte 20, 21 in axialer Richtung X hin zur Befestigungsöse 160, 161 beabstandet. Die Gewinnung eines solchen Abstandes ist verbunden mit der Gewinnung eines beidseitig an den Endplatten des Piezostapels angreifenden Hebelarmes. Je ein Hebelarm E, F wird gebildet durch das Abtriebselement 18, 19. Die Hebelarme E, F vergrößern den Abschnitt D um deren Länge, denn ursprünglich entsprach der Abschnitt D nur der Länge des Piezostapels.

Die bei einer Ansteuerung des piezoelektrischen Dehnungsaktuators beispielsweise erzeugte Zugkraft wird über die Abtriebsfläche der Abtriebselemente in die Strebe eingeleitet. Der zwischen den Abtriebsflächen 23, 24 liegende Abschnitt D der Strebe 16 wird somit einer gesteuerten Formänderung in axialer Richtung X ausgesetzt. Dabei handelt es sich um eine elastische Formänderung. Gegenüber der vorangehend beschriebenen Lösung nutzt diese alternative Lösung die geringere Steifigkeit eines vergrößerten Strebenabschnittes. Damit wird der Wirkungsgrad der Krafteinleitung eines Piezoaktuators 17 deutlich erhöht. Es wird somit möglich, einen deutlich kleineren Piezostapel einzusetzen, ohne einen Wirkungsgradverlust hinnehmen zu müssen.

In Abhängigkeit einer Anordnung der Piezostapel entlang des Umfangs der Strebe kann eine vielachsige Beeinflussung der Formänderung des bezeichneten Abschnitts D der Strebe 16 gesteuert werden.

Die in Fig. 4 gezeigte Anordnung kann beispielsweise auch in den Innenraum einer rohrförmigen Strebe angeordnet werden.

Wie Fig. 4 weiterhin zeigt, wird diese elastische Formänderung des Abschnitts D mittels einer Regeleinrichtung 25 geregelt. Die Regeleinrichtung hat im Bereich jedes Abtriebselements 18, 19 vorzugsweise in Nähe der Aufsetzfläche 23, 24 einen Sensor 26, der ein Signal über die quantitative Größe der vorliegenden Vibrationskräfte ermittelt und an die Regeleinrichtung liefert. Die Regeleinrichtung 25 regelt den Piezostapel 22 so, dass vom Piezostapel eine Kraft erzeugt und über die Abtriebselemente 18, 19 auf die Strebe 16 eingeleitet wird, zur Erzeugung einer elastischen Formänderung des Strebenabschnitts D.

Der Abstand D zwischen den Aufsetzflächen 23, 24 kann veränderlich einstellbar gemacht werden, indem mindestens ein Hebelarm E, F vergrößerbar und verkleinerbar ausgebildet ist.

Die voranstehenden Erläuterungen gelten analog für den Piezoaktuator 170 in Fig. 4 mit den Abtriebselementen 180, 190 und den Piezostapel 220 mit den Endplatten 200, 210.

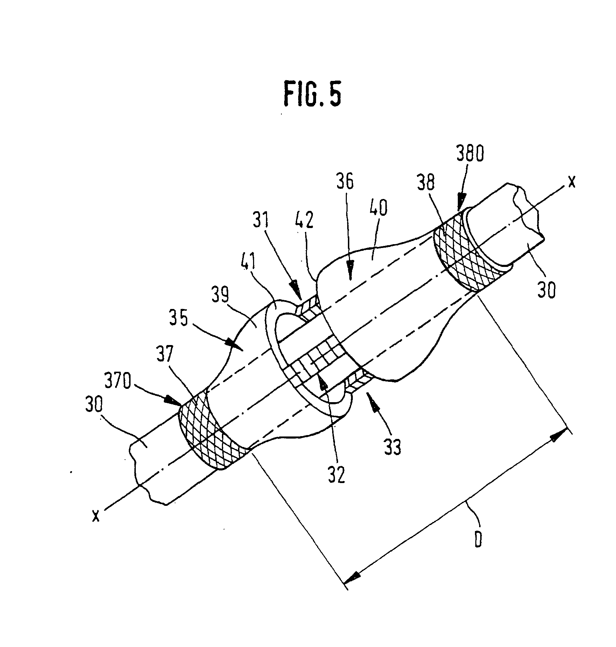

Fig. 5 zeigt ausschnittsweise ein Ausführungsbeispiel für eine Strebe 30, wobei die beiden Befestigungsösen an den Enden der Strebe 30 nicht dargestellt sind.

Fig. 5 zeigt drei Piezostapel 31, 32, 33, die mit den Abtriebselementen 35, 36 einen Piezoaktuator 34 bilden. Diese Piezostapel 31, 32, 33 sind beispielsweise um 120° gegeneinander versetzt. Jeder der Piezostapel kann gegenüber der Oberfläche der Strebe beabstandet sein. Sie können jedoch auch auf der Oberfläche der Strebe 30 angeordnet sein. Ersteres wird im Beispiel gezeigt.

Die axiale Achse der Piezostapel ist in Richtung der axialen Achse X der Strebe 30 ausgerichtet. Jeder der Piezostapel ist zwischen zwei Abtriebselementen 35, 36 angeordnet. Die beiden je einen Piezostapel 31, 32, 33 greifenden Abtriebselemente 35, 36 haben jeweils eine Ringfassung 37, 38 ausgebildet, die die Strebe 30 form- und kraftschlüssig entlang deren Umfangsfläche umschließt. Ausgehend von der Ringfassung 37, 38 öffnet sich das Abtriebselement 35, 36 glockenförmig wie eine Manschette, die vom Rand der Ringfassung beginnend bis zu ihrem ringförmigen Rand von der Strebe beabstandet ist. Diese Gestalt wird als ringförmige Manschette 39, 40 bezeichnet. Auf dem Rand 41 der Manschette 39 liegt jeweils ein Ende der Piezostapel 31, 32, 33 auf. Das jeweils andere Ende der drei Piezostapel 31, 32, 33 liegt am Rand 42 der Manschette 40 auf.

Die Ringfassung 37, 38 der Manschette 39, 40 ist von ausreichender Steifigkeit und Festigkeit, die einer Aufsetzfläche 370, 380 entspricht, die kraft- und formschlüssig in Umfangsrichtung mit der Oberfläche der Strebe 30 verbunden ist. Über die Aufsetzfläche 370, 380 erfolgt die Einleitung der von den Piezostapeln 31, 32, 33 erzeugten Kräfte. Ein solches konstruktiv ausgebildetes Abtriebselement 35, 36 gestattet eine Wirkung in einer Vielzahl von Raumachsen. Es bestehen somit variablere Gestaltungsmöglichkeiten der Krafteinleitung in die Strebe 30. Die Kräfte und Biegemomente, die in die Strebe 30 eingeleitet werden, können zu einer Auslenkung in longitudinaler (axialer) Richtung, zu einer lateralen Biegeauslenkung in einer beliebigen Richtung als auch zur Torsion der Strebe 30 eingesetzt werden.

Diese elastische Formänderung betrifft auch bei der Strebe 30 einen Strukturbereich entlang des Abschnitts D.

Durch die Verwendung von mindestens zwei um die Strebe angeordneten Piezostapeln kann, bei geeigneter Ansteuerung der einzelnen Piezostapel, die Strebe in longitudinaler und lateraler Richtung ausgelenkt werden. Eine entsprechende Steuer- oder Regeleinrichtung ist bei Fig. 5 nicht dargestellt.

Es ist auch möglich, durch schräges Einsetzen der Piezostapel, d.h. eine zur Längsachse X der Strebe 30 gekippte Anordnung mindestens eines Piezostapels, eine Torsionskraft einzuleiten.

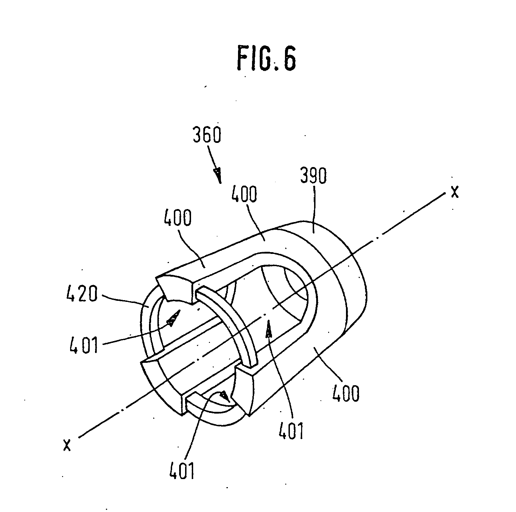

**Fig. 6** zeigt eine mögliche weitere Ausgestaltung eines Abtriebselements.Es wird ein einzelnes Abtriebselement 360 ohne Strebe und ohne Piezostapel gezeigt. Das Abtriebselement 360 wird in Richtung der axialen Achse X einer Strebe geführt und mittels ihrer Ringfassung 390 an der Oberfläche der Strebe befestigt. An der Ringfassung ist eine Manschette 400 ausgebildet. Diese Manschette 400 weist Aussparungen 401 auf, so dass Gewicht des Abtriebselements gespart werden kann. Die Manschette 400 hat beispielsweise drei Arme ausgebildet, die zueinander im Winkel von 120° angeordnet sein können. Diese drei Arme der Manschette 400 werden an ihrem Ende durch einen Ring 420 verbunden und begrenzt. Dieser Ring 420 bildet den Rand der Manschette 400. Auf dem Rand der Manschette wird jeweils ein Ende eines Piezostapels angeordnet.

Nach einer weiteren Ausgestaltung (nicht dargestellt) ist es auch möglich, ein Abtriebselement 360 partiell in Teilabtriebselemente zu unterteilen. Hierzu werden in einer Richtung entlang des Umfangs einer Strebe segmentweise nacheinander Teilabtriebselemente formschlüssig miteinander angeordnet und verbunden.Bei Blickrichtung in X-Achse ist ein Abtriebselement in einzelne (keilförmige) Segmente teilbar,die um die X-Achse angeordnet sind.Somit wird das Abtriebselement segmentweise aus Teilabtriebselementen zusammengesetzt.Beispielsweise das Abtriebselement nach Fig.5 könnte bei drei Piezostapeln aus drei Teilabtriebselementen zusammengesetzt sein.Diese Anordnung von Teilabtriebselementen ist eine einfache Möglichkeit zum Nachrüsten einer bereits installierten Strebe am Hubschrauber.

Eine solche Anordnung ermöglicht es, die vom Hauptgetriebe ausgehenden Vibrationen gegenüber der Zellenstruktur des Cockpits eines Hubschraubers in effizienter Weise für den Piloten und die Passagiere spürbar zu reduzieren.

## Patentansprüche

1. Piezoelektrischer Dehnungsaktuator zur Vibrationsreduzierung in Strukturen, umfassend einen Piezostapel (2) aus d33-Piezoelementen, welcher zwischen Abtriebselementen (4) aufgenommen ist, die auf der Oberfläche einer Struktur (7) befestigt sind, **dadurch gekennzeichnet, dass** der Piezostapel (2) an einem Abschnitt der Struktur (7) Kräfte einleitet, wobei die Aufsetzflächen der Abtriebselemente (4) auf der Struktur (7) gegenüber entsprechenden Endplatten (3) des Piezostapels (2) in Längsrichtung der Struktur (7) beabstandet sind, so dass der Abschnitt der Krafteinleitung vergrößert ist, um eine Steifigkeitstransformation zu bewirken.

2. Dehnungsaktuator nach Patentanspruch 1, **dadurch gekennzeichnet, dass** auf den Piezostapel (2) mittels eines Vorspannelementes (6) eine mechanische Druckspannung ausgeübt ist.

3. Dehnungsaktuator nach Patentanspruch 2, **dadurch gekennzeichnet, dass** das Vorspannelement (6) aus einer oder mehreren mechanischen Zugfedern besteht.

4. Dehnungsaktuator nach Patentanspruch 3, **dadurch gekennzeichnet, dass** das Vorspannelement (6) aus elastischen Endplatten (3) besteht, die den in die Abtriebselemente (4) unter Druck eingesetzten Piezostapel (2) begrenzen.

5. Dehnungsaktuator nach einem der Patentansprüche 1 bis 4, **dadurch gekennzeichnet, dass** in den Dehnungsaktuator (1) eine Hubübersetzung integriert ist.

6. Dehnungsaktuator nach Patentanspruch 5, **dadurch gekennzeichnet, dass** zur Erzielung der Hubübersetzung in den Abtriebselementen (4) ein nach innen einseitig offener, parallel zur Oberfläche der Struktur (7) verlaufender Schlitz (9) und jeweils ein biegeweicher Drucksteg (8) zwischen den Endplatten (3) des Piezostapels (2) und den Abtriebsflächen (5) der Abtriebselemente (4) integriert ist.

7. Dehnungsaktuator nach Patentanspruch 5, **dadurch gekennzeichnet, dass** zur Erzielung der Hubübersetzung die Abtriebselemente (4) jeweils mit einem gelenkig gelagerten Hebel (12) ausgebildet sind, dass nach einem ersten Hebelabschnitt (13) der Piezostapel (2) mit einem Abtriebssteg (14) jeweils gelenkig gelagert an den Hebel (12) angreift und dass nach einem zweiten Hebelabschnitt (15) jeweils eine Abstützstange (11) gelenkig gelagert an den Hebel (12) angreift.

8. Piezoelektrischer Dehnungsaktuator zur Vibrationsreduzierung in Strukturen, wobei mindestens ein Piezoaktuator an einer Strebe angeordnet ist, die das Hauptgetriebe eines Hubschrauberrotors mit einer Zellenstruktur des Cockpits verbindet, wobei der Piezoaktuator (17, 170; 34) mindestens einen Piezostapel (22, 220; 31, 32, 33) aus d33-Piezoelementen aufweist, der zwischen Abtriebselementen (18, 19, 180, 190; 35, 36) aufgenommen ist, die auf der Oberfläche der Strebe (16; 30) befestigt sind **dadurch gekennzeichnet, dass** der Piezoaktuator an einem Abschnitt der Strebe eine steuerbare Kraft zur elastischen Formänderung dieses Abschnittes der Strebe einleitet, wobei die Aufsetzfläche (23, 24, 230, 240; 370, 380) eines Abtriebselements auf der Strebe gegenüber der entsprechenden Endplatte des Piezostapels (22, 220; 31, 32, 33) in axialer Richtung (X) beabstandet ist, um den Abschnitt der Krafteinleitung zu vergrößern und damit die Steifigkeit des Strebenabschnitts zu verringern.

9. Piezoelektrischer Dehnungsaktuator nach Anspruch 8, **dadurch gekennzeichnet, dass** das Abtriebselement (18, 19, 180, 190; 35, 36) von seiner Anordnung an einer Endplatte bis zum Ort der Krafteinleitung einen Hebelarm (E, F) ausbildet.

10. Dehnungsaktuator nach Anspruch 8 oder 9 **dadurch gekennzeichnet, dass** der Abstand (D) der Aufsetzflächen (23, 24, 230, 240) der Abtriebselemente (18, 19, 180, 190) veränderlich einstellbar ist.

11. Dehnungsaktuator nach einem der Ansprüche 8, 9 oder 10, **dadurch gekennzeichnet, dass** die Abtriebselemente (35, 36) manschettenförmig ausgebildet sind.

12. Dehnungsaktuator nach Anspruch 11, **dadurch gekennzeichnet, dass** zwischen den manschettenförmig ausgebildeten Abtriebselementen (35, 36) die Piezostapel (31, 32, 33) um 120 ° zueinander versetzt angeordnet sind

13. Dehnungsaktuator nach einem der Ansprüche 8 bis 12, **dadurch gekennzeichnet, dass** die Manschette (400) des Abtriebselements (360) Aussparungen (401) aufweist.

14. Dehnungsaktuator nach einem der Ansprüche 8 bis 13, **dadurch gekennzeichnet, dass** die Abtriebselemente (18, 19, 189, 190; 35, 36) in einer Umfangsrichtung der Strebe aus Teilabtriebselementen zusammensetzbar sind, so dass eine Nachrüstung einer bereits angeordneten Strebe möglich ist.

## Claims

1. Piezo-electric extension actuator for vibration reduction in structures, comprising a piezo-stack (2) of d33 piezo-elements, the piezo-stack (2) being contained between driven elements (4), which are fixed on the surface of a structure (7), **characterized in that** the piezo-stack (2) introduces forces on a section of the structure (7), the contact surfaces of the driven elements (4) on the structure (7) being at a distance in relation to corresponding end plates (3) of the piezo-stack (2) in the longitudinal direction of the structure (7), so that the section of the force introduction is enlarged, to cause a rigidity transformation.

2. Extension actuator according to Claim 1, **characterized in that** a mechanical compressive strain is exerted on the piezo-stack (2) by means of a pretensioning element (6).

3. Extension actuator according to Claim 2, **characterized in that** the pretensioning element (6) consists of one or more mechanical tension springs.

4. Extension actuator according to Claim 3, **characterized in that** the pretensioning element (6) consists of elastic end plates (3), which delimit the piezo-stack (2), which is inserted into the driven elements (4) under pressure.

5. Extension actuator according to one of Claims 1 to 4, **characterized in that** a stroke transmission is integrated into the extension actuator (1).

6. Extension actuator according to Claim 5, **characterized in that** to achieve the stroke transmission in the driven elements (4), a slot (9) which is open inwards on one side and runs parallel to the surface of the structure (7), and in each case a flexible, soft pressure fin (8), are integrated between the end plates (3) of the piezo-stack (2) and the driven surfaces (5) of the driven elements (4).

7. Extension actuator according to Claim 5, **characterized in that** to achieve the stroke transmission, the driven elements (4) are each in a form with a hinged lever (12), that after a first lever section (13) the piezo-stack (2) in each case acts on the lever (12) with a driven fin (14) and a hinge, and that after a second lever section (15) the supporting rod (11) acts on the lever (12) with a hinge.

8. Piezo-electric extension actuator for vibration reduction in structures, at least one piezo-actuator being arranged on a stanchion that connects the main transmission of a helicopter rotor to a cell structure of the cockpit, the piezo-actuator (17, 170; 34) having at least one piezo-stack (22, 220; 31, 32, 33) which consists of d33 piezo-elements and is contained between driven elements (18, 19, 180, 190; 35, 36), which are fixed on the surface of the stanchion (7), **characterized in that** the piezo-actuator introduces, on one section of the stanchion, a controllable force for elastic deformation of this section of the stanchion, the contact surface (23, 24, 230, 240; 370, 380) of a driven element on. the stanchion being at a distance in the axial direction (X) compared with the corresponding end plate of the piezo-stack (22, 220; 31, 32, 33), to enlarge the section of the force introduction and thus reduce the rigidity of the stanchion section.

9. Piezo-electric extension actuator according to Claim 8, **characterized in that** the driven element (18, 19, 180, 190; 35, 36), from its arrangement on an end plate to the place of force introduction, forms a lever arm (E, F).

10. Extension actuator according to Claim 8 or 9, **characterized in that** the distance (D) of the contact surfaces (23, 24, 230, 240) of the driven elements (18, 19, 180, 190) can be variably adjusted.

11. Extension actuator according to one of Claims 8, 9 or 10, **characterized in that** the driven elements (35, 36) are in the form of collars.

12. Extension actuator according to Claim 11, **characterized in that** between the driven elements (35, 36) in the form of collars, the piezo-stacks (31, 32, 33) are arranged displaced by 120° relative to each other.

13. Extension actuator according to one of Claims 8 to 12, **characterized in that** the collar (400) of the driven element (360) has recesses (401).

14. Extension actuator according to one of Claims 8 to 13, **characterized in that** the driven elements (18, 19, 189, 190; 35, 36) can be put together out of partial driven elements in a circumferential direction of the stanchion, so that it is possible to retrofit a previously arranged stanchion.

## Revendications

1. Actionneur d'extension piézo-électrique pour réduire des vibrations dans des structures, comprenant une piézo-pile (2) de piézo-éléments « d33 » logée entre des éléments de dérive (4) fixés à la surface d'une stucture (7),
**caractérisé en ce que**
la piézo-pile (2) introduit des forces sur une partie de la structure (7), les surfaces d'appui des éléments de dérive (4) sur la structure (7) étant espacées par rapport à des plaques d'extrémité correspondantes (3) de la piézo-pile (2) dans la direction longitudinale de la structure (7), de telle sorte que la partie de l'introduction de forces est agrandie pour provoquer une transformation de rigidité.

2. Actionneur d'extension selon la revendication 1,
**caractérisé en ce qu'**
une tension de compression mécanique est exercée sur la piézo-pile (2) au moyen d'un élément de précontrainte (6).

3. Actionneur d'extension selon la revendication 2,
**caractérisé en ce que**
l'élément de précontrainte (6) comprend un ou plusieurs ressorts de traction mécaniques.

4. Actionneur d'extension selon la revendication 3,
**caractérisé en ce que**
l'élément de précontrainte (6) comprend des plaques d'extrémité élastiques (3) qui délimitent la piézo-pile (2) insérée sous pression dans les éléments de dérive (4).

5. Actionneur d'extension selon l'une quelconque des revendications 1 à 4,
**caractérisé en ce qu'**
une transmission de course est intégrée dans l'actionneur d'extension (1).

6. Actionneur d'extension selon la revendication 5,
**caractérisé en ce que**
pour obtenir la transmission de course, une fente (9) ouverte d'un côté vers l'intérieur s'étendant parallèlement à la surface de la structure (7) est intégrée dans les éléments de dérive (4) et une nervure de compression flexible (8) est respectivement intégrée entre les plaques d'extrémité (3) de la piézo-pile (2) et les surfaces de dérive (5) des éléments de dérive (4).

7. Actionneur d'extension selon la revendication 5,
**caractérisé en ce que**
pour obtenir la transmission de course, les éléments de dérive (4) sont formés respectivement avec un levier (12) logé de manière articulée, selon une première partie de levier (13) la piézo-pile (2), à l'aide d'une nervure de dérive (14), est reliée de manière respectivement articulée au levier (12), et selon une deuxième partie de levier (15) respectivement une tige d'appui (11) est reliée de manière articulée au levier (12).

8. Actionneur d'extension piézo-électrique pour réduire des vibrations dans des structures, au moins un actionneur piézo-électrique étant disposé sur un montant qui relie l'engrenage principal d'un rotor d'hélicoptère à une structure cellulaire du cockpit, l'actionneur piézo-électrique (17, 170 ; 34) présentant au moins une piézo-pile (22, 220 ; 31, 32, 33) de piézo-éléments « d33 » logée entre des éléments de dérive (18, 19, 180, 190 ; 35, 36) qui sont fixés à la surface du montant (16 ; 30),
**caractérisé en ce que**
l'actionneur piézo-électrique introduit sur une partie du montant une force contrôlable pour la modification de forme élastique de cette partie du montant, la surface d'appui (23, 24, 230, 240 ; 370, 380) d'un élément de dérive sur le montant étant espacée par rapport à la plaque d'extrémité correspondante de la piézo-pile (22, 220 ; 31, 32, 33) dans la direction axiale (X) pour agrandir la partie de l'introduction de forces et ainsi réduire la rigidité de la partie du montant.

9. Actionneur d'extension piézo-électrique selon la revendication 8,
**caractérisé en ce que**
l'élément de dérive (18, 19, 180, 190 ; 35, 36), depuis sa disposition sur une plaque d'extrémité jusqu'au point d'introduction de forces, forme un bras de levier (E, F).

10. Actionneur d'extension selon la revendication 8 ou 9,
**caractérisé en ce que**
la distance (D) des surfaces d'appui (23, 24, 230, 240) des éléments de dérive (18, 19, 180, 190) est réglable de manière variable.

11. Actionneur d'extension selon l'une quelconque des revendications 8, 9 ou 10,
**caractérisé en ce que**
les éléments de dérive (35, 36) présentent la forme d'une manchette.

12. Actionneur d'extension selon la revendication 11,
**caractérisé en ce qu'**
entre les éléments de dérive (35, 36) en forme de manchette, les piézo-piles (31, 32, 33) sont décalées de 120° les unes par rapport aux autres.

13. Actionneur d'extension selon l'une quelconque des revendications 8 à 12,
**caractérisé en ce que**
la manchette (400) de l'élément de dérive (360) présente des évidements (401).

14. Actionneur d'extension selon l'une quelconque des revendications 8 à 13,
**caractérisé en ce que**
dans une direction circonférentielle du montant les éléments de dérive (18, 19, 189, 190 ; 35, 36) peuvent être assemblés à partir d'éléments de dérive partiels, de façon à pouvoir équiper ultérieurement un montant déjà disposé.
